(19) Europäisches Patentamt
European Patent Office
Office européen des brevets

(11) **EP 4 290 635 A1**

(12) **EUROPEAN PATENT APPLICATION**
published in accordance with Art. 153(4) EPC

(43) Date of publication:
**13.12.2023 Bulletin 2023/50**

(21) Application number: **21925005.7**

(22) Date of filing: **29.12.2021**

(51) International Patent Classification (IPC):
***H01M 10/0567*** *(2010.01)* ***H01M 4/525*** *(2010.01)*
***H01M 10/0525*** *(2010.01)*

(52) Cooperative Patent Classification (CPC):
**H01M 4/525; H01M 10/0525; H01M 10/0567;**
Y02E 60/10

(86) International application number:
**PCT/KR2021/020176**

(87) International publication number:
**WO 2022/169109 (11.08.2022 Gazette 2022/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.02.2021 KR 20210016839**

(71) Applicant: **Samsung SDI Co., Ltd.**
**Yongin-si, Gyeonggi-do 17084 (KR)**

(72) Inventors:
- **CHO, Won Seok**
**Yongin-si, Gyeonggi-do 17084 (KR)**
- **KIM, Da Hyun**
**Yongin-si, Gyeonggi-do 17084 (KR)**
- **KIM, Min Seo**
**Yongin-si, Gyeonggi-do 17084 (KR)**
- **PARK, Sang Woo**
**Yongin-si, Gyeonggi-do 17084 (KR)**
- **OH, Seung Yeop**
**Yongin-si, Gyeonggi-do 17084 (KR)**
- **WOO, Myung Heui**
**Yongin-si, Gyeonggi-do 17084 (KR)**
- **LEE, Tae Jin**
**Yongin-si, Gyeonggi-do 17084 (KR)**

(74) Representative: **Gulde & Partner**
**Patent- und Rechtsanwaltskanzlei mbB**
**Wallstraße 58/59**
**10179 Berlin (DE)**

(54) **ELECTROLYTE FOR LITHIUM SECONDARY BATTERY, AND LITHIUM SECONDARY BATTERY COMPRISING SAME**

(57) Disclosed are an electrolyte for a lithium secondary battery, and a lithium secondary battery including the same, the electrolyte including: a lithium salt; an organic solvent; and a compound represented by Formula 1.

Formula 1

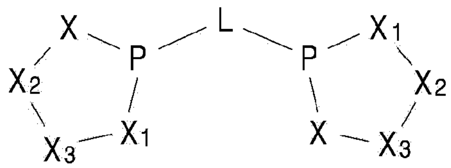

In Formula 1, L, X, $X_1$, $X_2$, and $X_3$ are as defined herein.

EP 4 290 635 A1

FIG. 1

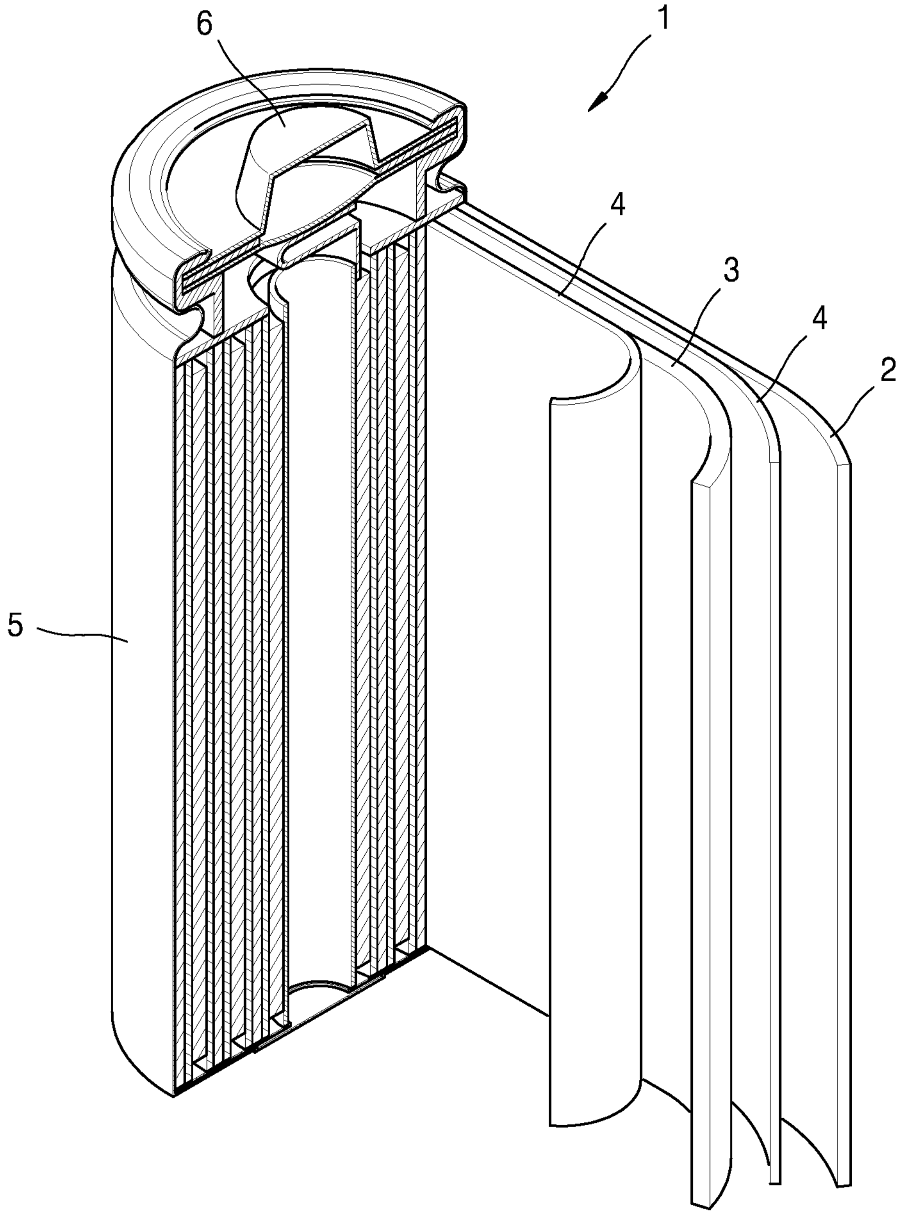

## Description

TECHNICAL FIELD

The present disclosure relates to an electrolyte for a lithium secondary battery, and a lithium secondary battery including the same.

BACKGROUND ART

Lithium batteries are used as power sources for portable electronic devices such as video cameras, cell phones, and laptop computers. Rechargeable lithium secondary batteries have a high energy density per unit weight compared to conventional lead storage batteries, nickel-cadmium batteries, nickel-hydride batteries, nickel-zinc batteries, or the like, and may be rapidly charged.

Lithium batteries operate at a high driving voltage, and thus, an aqueous-based electrolyte solution that is highly reactive with lithium should not be used in the lithium batteries. Generally, an organic electrolyte is used as the electrolyte for a lithium secondary battery. The organic electrolyte is prepared by dissolving a lithium salt in an organic solvent. An example of a preferable organic solvent is one that is stable at a high voltage, has high ion conductivity and permittivity, and has a low viscosity.

However, when an organic electrolyte containing a lithium salt is used as the electrolyte for a lithium secondary battery, the lifespan characteristics and high-temperature stability of the lithium secondary battery may deteriorate due to side reactions between negative electrode/positive electrode and the electrolyte.

Accordingly, there is a demand for an electrolyte for lithium secondary batteries that is capable of providing a lithium secondary battery with improved lifespan characteristics and stability at high temperatures.

TECHNICAL PROBLEM

One aspect of the disclosure provides an electrolyte for a lithium secondary battery, which is capable of improving battery performance.

Another aspect of the disclosure provides a lithium secondary battery having improved performance by including the above-described electrolyte for a lithium secondary battery.

SOLUTION TO PROBLEM

According to one aspect of the disclosure,
an electrolyte for a lithium secondary battery includes: a lithium salt; an organic solvent; and a compound represented by Formula 1.

Formula 1

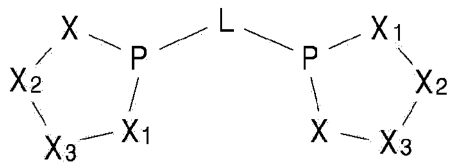

In Formula 1, L may be $-C(R_1)(R_2)-$, $-N(R_1)-$, O, S, or $-C(=O)-$,

X and $X_1$ may each independently be O, S, or $-S(=O)-$,
$X_2$ may be $-\{C(R_3)(R_4)\}_n-$ or $-C=N-R_1$, and
$X_3$ may be $-\{C(R_3)(R_4)\}_m-$ or $-C=N-R_1$,
wherein $R_1$ to $R_4$ may each independently be hydrogen, a cyano group, an unsubstituted or substituted C1-C20 alkyl group, an unsubstituted or substituted C1-C20 alkoxy group, an unsubstituted or substituted C2-C20 alkenyl group, an unsubstituted or substituted C2-C20 alkynyl group, an unsubstituted or substituted C2-C20 alkynyl group, an unsubstituted C3-C20 cycloalkyl group, an unsubstituted or substituted C6-C20 aryl group, or an unsubstituted or substituted C2-C20 heteroarylene group, or at least one of $R_1$ and $R_4$ and at least one of $R_3$ and $R_4$ are connected to form a ring, and
n and m each independently are an integer of 1 to 4.

According to another aspect of the disclosure, a lithium secondary battery includes:

a positive electrode including a positive electrode active material;
a negative electrode including a negative electrode active material; and
the above-described electrolyte positioned between the positive electrode and the negative electrode.

ADVANTAGEOUS EFFECTS OF DISCLOSURE

Using an electrolyte for a lithium secondary battery according to an embodiment may inhibit increases in battery resistance when stored at high temperature and may improve lifespan characteristics of a lithium secondary battery.

BRIEF DESCRIPTION OF DRAWINGS

FIG. 1 is a schematic diagram of a lithium secondary battery according to an embodiment.
FIG. 2 shows changes in direct current internal resistance of lithium secondary batteries of Example 3 and Comparative Examples 2 and 3 upon storage at a high temperature.

MODE OF DISCLOSURE

Hereinbelow, an electrolyte for a lithium secondary battery, and a lithium secondary battery including the electrolyte according to embodiments will be described in greater detail.
An electrolyte for a lithium secondary battery according to an embodiment includes: a lithium salt; an organic solvent; and a compound represented by Formula 1.

Formula 1

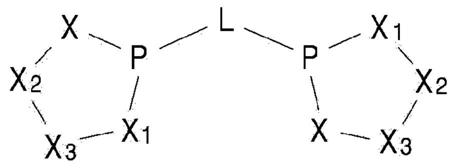

wherein, in Formula 1, L may be $-C(R_1)(R_2)-$, $-N(R_1)-$, O, S, or -C(=O)-,
X and $X_1$ may each independently be O, S, or -S(=O)-,
$X_2$ may be $-\{C(R_3)(R_4)\}_n-$ or $-C=N-R_1$, and
$X_3$ may be $-\{C(R_3)(R_4)\}_m-$ or $-C=N-R_1$,
wherein $R_1$ to $R_4$ may each independently be hydrogen, a cyano group, an unsubstituted or substituted C1-C20 alkyl group, an unsubstituted or substituted C1-C20 alkoxy group, an unsubstituted or substituted C2-C20 alkenyl group, an unsubstituted or substituted C2-C20 alkynyl group, an unsubstituted or substituted C2-C20 alkynyl group, an unsubstituted C3-C20 cycloalkyl group, an unsubstituted or substituted C6-C20 aryl group, or an unsubstituted or substituted C2-C20 heteroarylene group, or at least one of $R_1$ and $R_4$ and at least one of $R_3$ and $R_4$ are connected to form a ring, and
n and m each independently are an integer of 1 to 4.

When a positive electrode active material using a lithium transition metal oxide having a nickel content of 80 mol% or more is used, a lithium secondary battery having high output and high capacity may be manufactured. However, a positive electrode active material having a high nickel content due to having an unstable surface structure has an increased gas generation from side reactions during charge and discharge of the battery, and the lifespan characteristics of a lithium secondary battery using such a positive electrode active material may deteriorate. Further, since resistance increases at a high temperature, improvement in stability at a high temperature may be needed.
An electrolyte for a lithium secondary battery according to an embodiment may form an SEI layer and/or a protective layer having low resistance by using the compound represented by Formula 1 as an additive. Accordingly, by using such an electrolyte, a lithium secondary battery having reduced internal resistance may be prepared. In addition, through excellent resistance suppression at a high temperature, a lithium secondary battery having improved lifespan

and high-temperature stability may be prepared.

Without limiting the scope of the present disclosure and for better understanding, the mechanism by which the performance of a lithium secondary battery is improved by use of the compound represented by Formula 1 as an additive will be described in greater detail below.

$LiPF_6$ is typically used as a lithium salt in the electrolytes, but $LiPF_6$ has issues of insufficient thermal stability and is easily hydrolyzed even with moisture. As such, $LiPF_6$-containing electrolytes exhibit instability when exposed to moisture and high temperatures. Decomposition products of $LiPF_6$ are one of major factors contributing to changes in the stability and composition of a negative electrode interface. Residual moisture and/or surface hydroxyl groups may react with $PF_6$ anions in solution to generate HF and release $PF_5$. The HF thus released corrodes a positive electrode, and in some cases, corrodes a positive electrode, and thus causes gradual deterioration of electrochemical performance.

When a compound represented by Formula 1 is used as an electrolyte additive, a solid electrolyte interface (SEI) layer with high-temperature stability and excellent ion conductivity may be formed on the surface of a negative electrode, and side reactions with $LiPF_6$ due to $-PO_2F$ groups may be suppressed. As a result, cycle life characteristics are improved as gas generation due to decomposition reactions involving an electrolyte solution inside a lithium secondary battery during high-temperature storage is suppressed. In addition, swelling of the battery due to suppressed gas generation may be prevented.

In addition, as the electrolyte includes a compound represented by Formula 1, an SEI layer and/or protection layer having low resistance may be formed and therefore, a lithium secondary battery having reduced internal resistance may be obtained.

A first compound represented by Formula 1 strongly interacts with transition metal ions of the positive electrode to completely cap and deactivate the reaction centers on the surface of a positive electrode, thereby preventing solvent oxidation and transition metal dissolution. That is, a cathode electrolyte interphase (CEI) having low impedance characteristics is formed on the surface of the positive electrode. This CEI suppresses formation of by-products, such as gas and HF, by suppressing electrolyte oxidation, and improves cycle stability and rate performance by preventing a structural collapse of the electrode. In addition, the formation of the CEI lowers resistance at the interface between the electrolyte and the positive electrode, thus improving lithium ion conductivity and thereby increasing the low-temperature discharge voltage.

To describe the above effects in greater detail, the first compound represented by Formula 1 is capable of forming a complex by coordinating with thermal decomposition products of a lithium salt such as $LiPF_6$, or anions dissociated from a lithium salt, and through the formation of this complex the thermal decomposition products of the lithium salt or the anions dissociated from the lithium salt are stabilized, thus suppressing undesired side reactions between these components and the electrolyte solution. Accordingly, by improving the cycle life characteristics of a lithium secondary battery and preventing gas generation inside the lithium secondary battery, a significant decrease in defect rate may be achieved.

The content of the compound represented by Formula 1 may be in a range of 0.05 wt% to 20 wt% with respect to the total weight of the electrolyte. The content of the compound of Formula 1 is, for example, from 0.1 wt% to 10 wt%, from 0.5 wt% to 5 wt%, from 1 wt% to 3 wt%, or from 1.5 wt% to 2.5 wt%. When the content of the compound of Formula 1 is within the above ranges, a lithium secondary battery with improved high-temperature characteristics and resistance characteristics may be prepared without a decrease in lifespan characteristics by improving high-temperature storage characteristics and suppressing increases in interfacial resistance.

The compound represented by Formula 2 below.

Formula 2

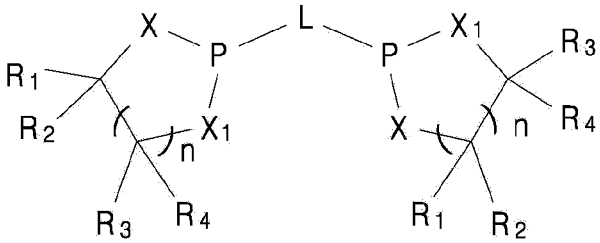

In Formula 2, L may be $-C(R_1)(R_2)-$, $-N(R_1)-$, O, S, or $-C(=O)-$,

X and $X_1$ may each independently be O, S, or $-S(=O)-$, and
$X_2$ may be $-\{C(R_3)(R_4)\}_n-$,
wherein $R_1$ to $R_4$ may each independently be hydrogen, a cyano group, an unsubstituted or substituted C1-C20

alkyl group, an unsubstituted or substituted C1-C20 alkoxy group, an unsubstituted or substituted C2-C20 alkenyl group, an unsubstituted or substituted C2-C20 alkynyl group, an unsubstituted or substituted C2-C20 alkynyl group, an unsubstituted C3-C20 cycloalkyl group, an unsubstituted or substituted C6-C20 aryl group, or an unsubstituted or substituted C2-C20 heteroarylene group, or at least one of $R_1$ and $R_4$ is connected to at least one of $R_3$ and $R_4$ to form a ring, and
n may be an integer of 1 to 4.

The compound represented by Formula 1 may be, for example, a compound represented by Formula 3 below.

Formula 3

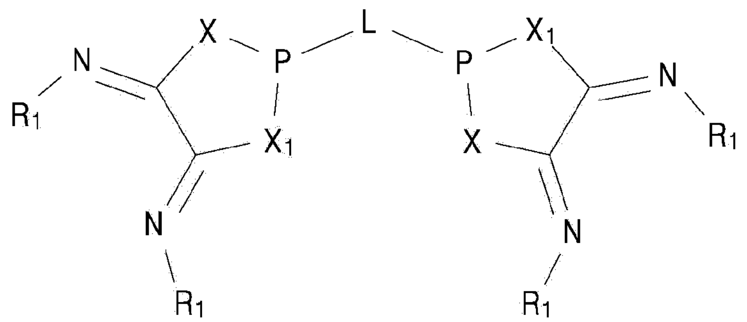

In Formula 3, L may be -C($R_1$)($R_2$)-, -N($R_1$)-, O, S, or -C(=O)-,

X and $X_1$ may each independently be O, S, or -S(=O)-, and
$X_2$ may be -{C($R_3$)($R_4$)}$_n$-,
wherein $R_1$ to $R_4$ may each independently be an unsubstituted or substituted C1-C20 alkyl group, an unsubstituted or substituted C1-C20 alkoxy group, an unsubstituted or substituted C2-C20 alkenyl group, an unsubstituted or substituted C2-C20 alkynyl group, an unsubstituted or substituted C2-C20 alkynyl group, an unsubstituted C3-C20 cycloalkyl group, an unsubstituted or substituted C6-C20 aryl group, or an unsubstituted or substituted C2-C20 heteroaryl group.

The compound represented by Formula 1 may be a compound represented by Formula 4 below.

Formula 4

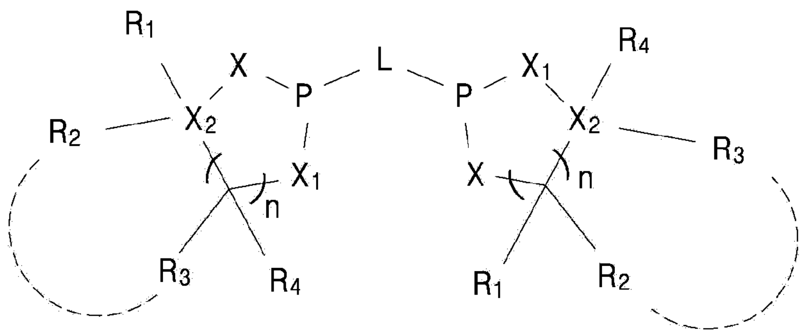

In Formula 4, L may be -C($R_1$)($R_2$)-, -N($R_1$)-, O, S, or -C(=O)-,

X and $X_1$ may each independently be O, S, or -S(=O)-, and
$X_2$ may be -C($R_3$)-,
wherein $R_1$ and $R_4$ may each independently be hydrogen, a cyano group, an unsubstituted or substituted C1-C20 alkyl group, an unsubstituted or substituted C1-C20 alkoxy group, an unsubstituted or substituted C2-C20 alkenyl group, an unsubstituted or substituted C2-C20 alkynyl group, an unsubstituted or substituted C2-C20 alkynyl group, an unsubstituted C3-C20 cycloalkyl group, an unsubstituted or substituted C6-C20 aryl group, or an unsubstituted or substituted C2-C20 heteroaryl group,

$R_2$ and $R_3$ may each be an unsubstituted or substituted C1-C20 alkylene group, an unsubstituted or substituted C2-C20 alkenylene group, an unsubstituted or substituted C2-C20 alkynylene group, an unsubstituted or substituted C3-C20 cycloalkylene group, an unsubstituted or substituted C6-C20 arylene group, or an unsubstituted or substituted C2-C20 heteroarylene group, and
n may be an integer of 1 to 4.

The compound represented by Formula 1 may be selected from among compounds represented by Formulas 5 to 8.

Formula 5

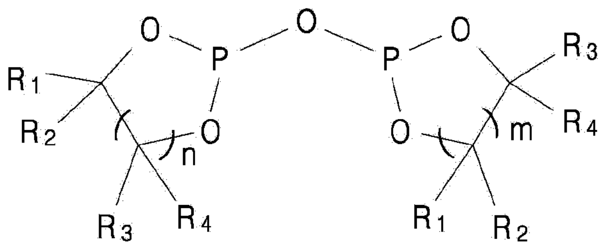

In Formula 5, $R_1$ to $R_4$ may each be hydrogen, a C1-C20 alkyl group, or a C6-C20 aryl group, and
n and m may each independently be an integer of 1 to 4,

Formula 6

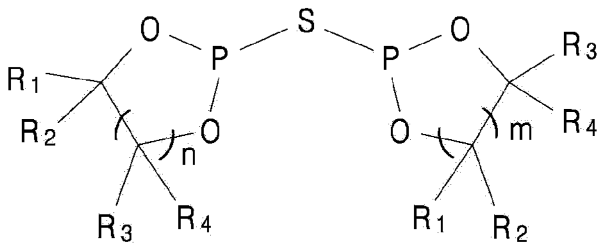

In Formula 6, $R_1$ to $R_4$ may each be hydrogen, a C1-C20 alkyl group, or a C6-C20 aryl group, and n and m each independently are an integer of 1 to 4,

Formula 7

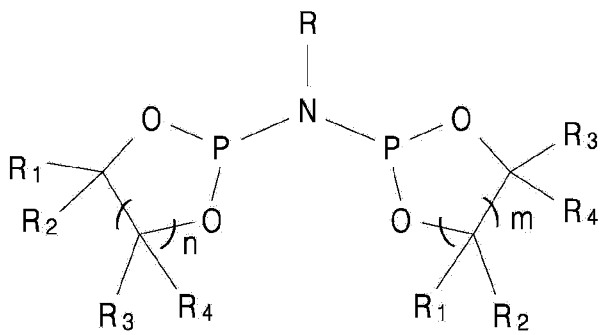

In Formula 7, $R_1$ to $R_4$ may each be hydrogen, a C1-C20 alkyl group, or a C6-C20 aryl group,

R may be hydrogen, a C1-C20 alkyl group, or a C6-C20 aryl group, and
n and m may each independently be an integer of 1 to 4,

Formula 8

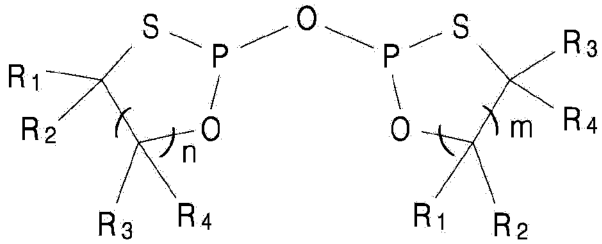

In Formula 8, $R_1$ to $R_4$ may each be hydrogen, a C1-C20 alkyl group, or a C6-C20 aryl group, and n and m may each independently be an integer of 1 to 4.

In Formulas 5 to 8, n may be an integer of 1 to 3, 1 to 2, or 1, and m may be an integer of 1 to 3, 1 to 2, or 2.

The compound represented by Formula 2 may be, for example, a compound selected from among compounds represented by Formulas 9 to 19.

Formula 9

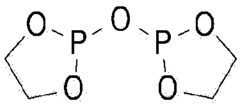

Formula 10

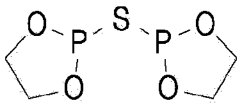

Formula 11

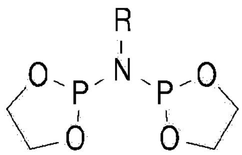

Formula 12

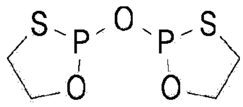

Formula 13

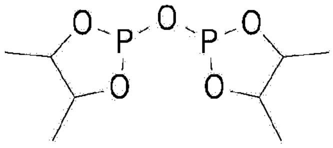

Formula 14

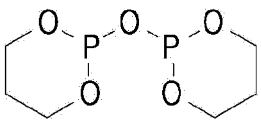

Formula 15

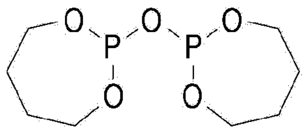

Formula 16

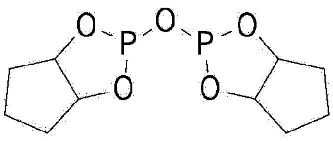

Formula 17

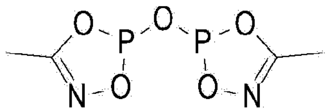

Formula 18

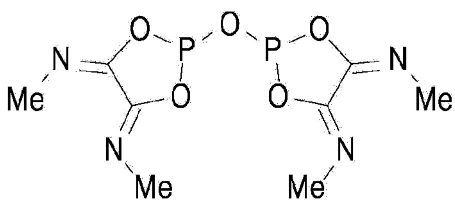

In Formula 18, Me represents a methyl group,

Formula 19>

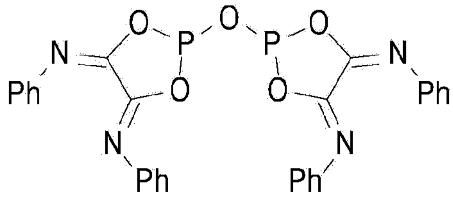

In Formula 19, Ph represents a phenyl group.

According to an embodiment, the lithium salt may include one or more selected from among $LiPF_6$, $LiBF_4$, $LiSbF_6$, $LiAsF_6$, $LiClO_4$, LiCFsSOs, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ ($2 \leq x \leq 20$, $2 \leq y \leq 20$), LiCl, LiI, lithium bis(oxalato)borate (LiBOB), $LiPO_2F_2$, and compounds represented by Formulas 21 to 24. However, the lithium salt is not limited to the aforementioned components and may be any lithium salt available in the art.

Formula 21

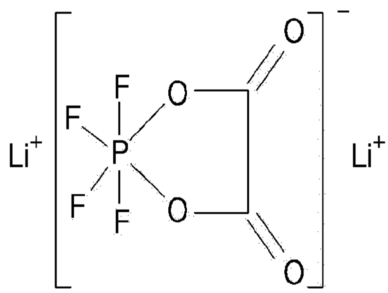

Formula 22

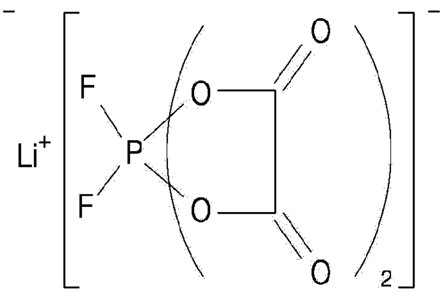

Formula 23

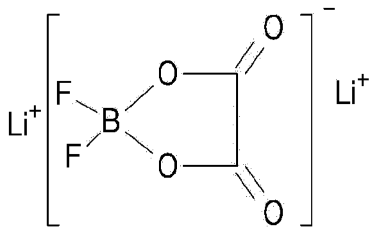

Formula 24

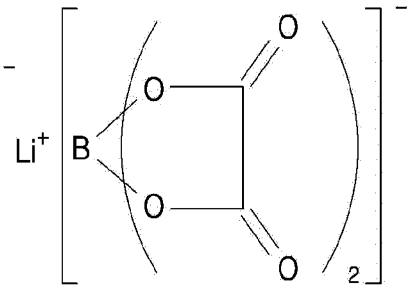

In the electrolyte, the concentration of the lithium salt may be from 0.01 M to 5.0 M, for example, from 0.05 M to 5.0 M, for example, from 0.1 M to 5.0 M, for example, from 0.1 M to 2.0 M. When the concentration of the lithium salt is within the above ranges, further improved characteristics of a lithium secondary battery may be achieved.

The organic solvent may be one or more selected from among a carbonate-based solvent, an ester-based solvent, an ether-based solvent, and a ketone-based solvent.

As the carbonate-based solvent, ethyl methyl carbonate (EMC), methyl propyl carbonate (MPC), ethyl propyl carbonate (EPC), dimethyl carbonate (DMC), diethyl carbonate (DEC), dipropyl carbonate (DPC), propylene carbonate (PC) as carbonate-based solvents, ethylene carbonate (EC), butylene carbonate (BC), and the like may be used.

As the ester-based solvent, methyl propionate, ethyl propionate, ethyl butyrate, methyl acetate, ethyl acetate, n-propyl acetate, dimethyl acetate, γ-butyrolactone, decanolide, γ-valerolactone, mevalonolactone, caprolactone, and the like may be used. As the ether-based solvent, dibutyl ether, tetraglyme, diglyme, dimethoxyethane, 2-methyltetrahydrofuran, tetrahydrofuran, and the like may be used. As the ketone-based solvent, cyclohexanone and the like may be used. As a nitrile-based solvent, acetonitrile (AN), succinonitrile (SN), adiponitrile, and the like may be used. Other available solvents include dimethyl sulfoxide, dimethylformamide, dimethylacetamide, tetrahydrofuran, and the like, but are not necessarily limited to the aforementioned components, and any organic solvent available in the art may be used. For example, the organic solvent may include a mixed solvent containing 50 vol% to 95 vol% of a chain carbonate and 5 vol% to 50 vol% of a cyclic carbonate, and may include, for example, a mixed solvent containing 70 vol% to 95 vol% of a chain carbonate and 5 vol% to 30 vol% of a cyclic carbonate. For example, the organic solvent may be a mixed solvent containing three or more types of organic solvents.

According to an embodiment, the organic solvent may include one or more selected from among an ethyl methyl carbonate (EMC), a methyl propyl carbonate, an ethyl propyl carbonate, a dimethyl carbonate (DMC), a diethyl carbonate (DEC), a dipropyl carbonate, a propylene carbonate (PC), an ethylene carbonate (EC), a fluoroethylene carbonate (FEC), a vinylene carbonate (VC), a vinyl ethylene carbonate (VEC), a butylene carbonate, an ethyl propionate, an ethyl butyrate, a dimethyl sulfoxide, a dimethylformamide, a dimethylacetamide, γ-valerolactone, γ-butyrolactone, and tetrahydrofuran. However, the organic solvent is not limited to the aforementioned components and may be any organic solvent available in the art.

An electrolyte for a lithium secondary battery according to an embodiment may further contain a disultone-based compound. The disultone-based compound has a higher reduction potential than that of the compound represented by Formula 1, and thus participates in formation of the SEI layer first, thereby preventing over-decomposition of the compound represented by Formula 1. Consequently, as side reactions with the electrolyte solution are suppressed, an SEI layer and/or a protection layer with low resistance may be formed. The compound of Formula 1, of which the over-decomposition is suppressed by the disultone-based compound, may reduce side reactions with the electrolyte solution by suppressing high-temperature thermal decomposition of a lithium salt at a high temperature, e.g., during high-temperature storage.

The content of the disultone-based compound may be, for example, from 0.05 wt% to 20 wt%, from 0.1 wt% to 10 wt%, from 0.5 wt% to 5 wt%, from 1 wt% to 3 wt%, or from 1.5 wt% to 2.5 wt%, with respect to the total weight of the electrolyte. When the content of the disultone-based compound is within the above ranges, capacity and lifespan may be further improved by suppression of an increase in interfacial resistance, and decomposition reactions of the electrolyte solution may be suppressed by forming an SEI layer having low resistance and excellent thermal stability.

The disultone-based compound is, for example, a compound represented by Formula 20 below.

Formula 20

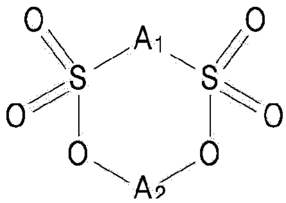

In Formula 20, $A_1$ and $A_2$ may each independently be: an unsubstituted or substituted C1-C5 alkylene group; a carbonyl group; a sulfinyl group; or a C2-C6 divalent group in which multiple unsubstituted or substituted alkylene units are linked through ether bonds.

Examples of the disultone-based compound may include a compound represented by Formula 20-1 below.

Formula 20-1

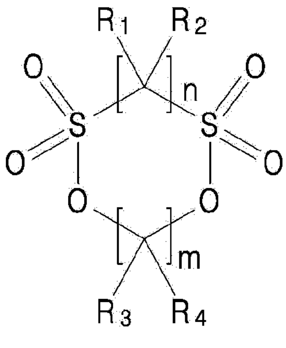

In Formula 20-1, $R_1$ to $R_4$ may each independently be hydrogen, a cyano group, an unsubstituted or substituted C1-C20 alkyl group, an unsubstituted or substituted C1-C20 alkoxy group, an unsubstituted or substituted C2-C20 alkenyl group, an unsubstituted or substituted C2-C20 alkynyl group, an unsubstituted or substituted C2-C20 alkynyl group, an unsubstituted C3-C20 cycloalkyl group, an unsubstituted or substituted C6-C20 aryl group, or an unsubstituted or substituted C2-C20 heteroaryl group,

n may be an integer of 0 or 1, and
m may be an integer of 1 to 5.

The compound represented by Formula 20 may be, for example, at least one selected from among compounds represented by Formula 20-2 to Formula 20-19 below.

Formula 20-2 Formula 20-3 Formula 20-4 Formula 20-5

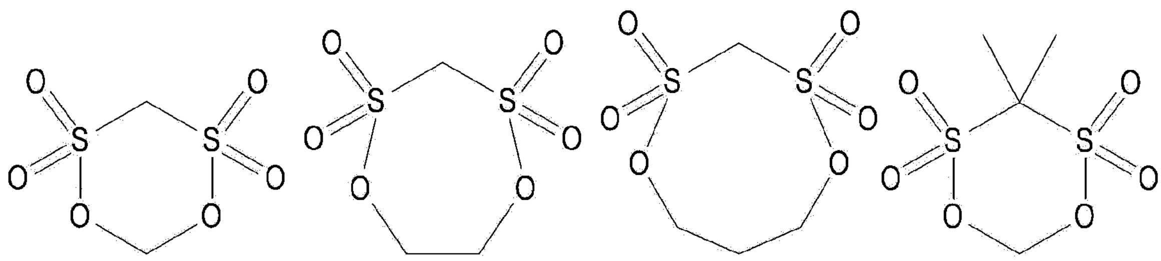

Formula 20-6 Formula 20-7 Formula 20-8 Formula 20-9

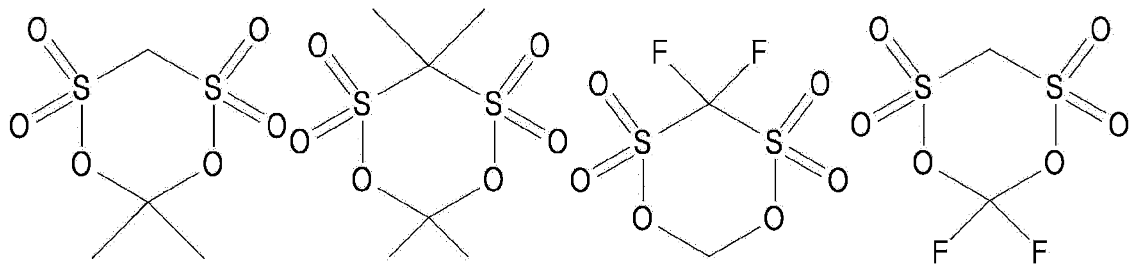

Formula 20-10 Formula 20-11 Formula 20-12 Formula 20-13

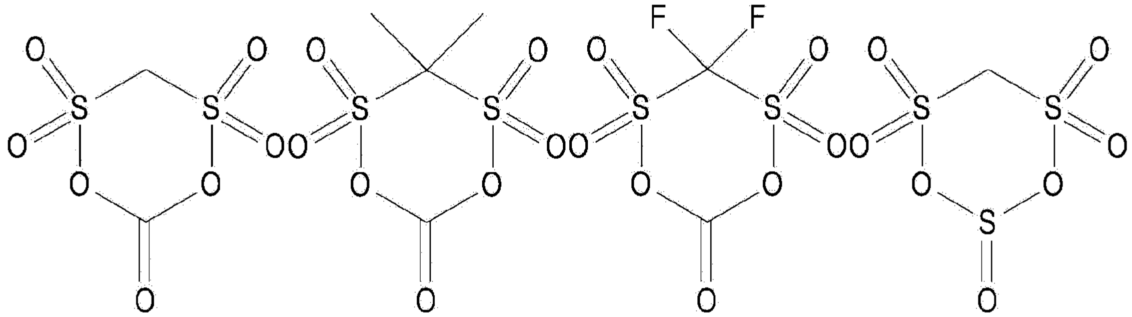

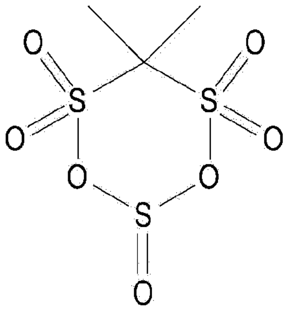

Formula 20-14 Formula 20-15 Formula 20-16

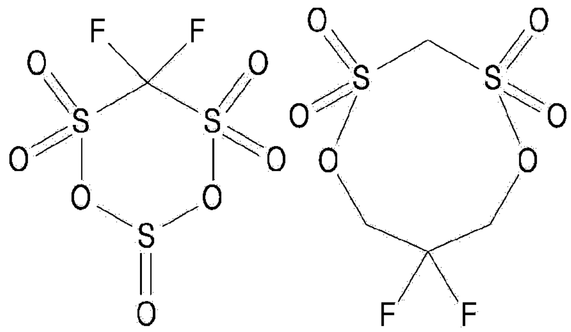

Formula 20-17 Formula 20-18 Formula 20-19

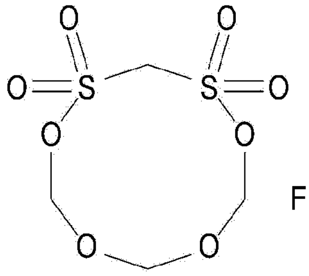

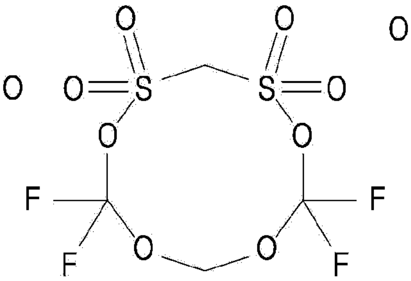

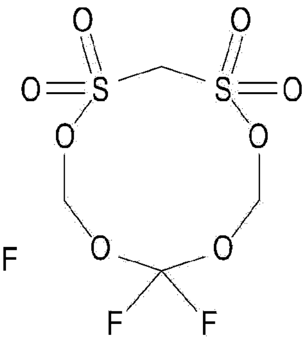

For example, the disultone-based compound may be a compound represented by Formula 20-2.

The electrolyte may be in a liquid state or a gel state. The electrolyte may be prepared by adding a lithium salt and the additive to an organic solvent.

A lithium secondary battery according to another embodiment includes: a positive electrode including a positive electrode active material; a negative electrode including a negative electrode active material; and the above-described electrolyte positioned between the positive electrode and the negative electrode.

By including the above-described electrolyte additive for a lithium secondary battery, the lithium secondary battery may suppress an increase in the initial resistance of the lithium secondary battery, may suppress gas generation due to side reactions, and may have improved lifespan characteristics.

The positive electrode active material includes a lithium transition metal oxide including nickel and another transition metal. In the lithium transition metal oxide including nickel and another transition metal, the content of nickel may be 60 mol% or more, for example, 75 mol% or more, for example, 80 mol% or more, for example, 85 mol% or more, for example, 90 mol% or more, with respect to the total number of moles of transition metals.

For example, the lithium transition metal oxide may be a compound represented by Formula 7-1:

Formula 7-1 $Li_aNi_xCo_yM_zO_{2-b}A_b$

In Formula 7-1, $1.0 \leq a \leq 1.2$, $0 \leq b \leq 0.2$, $0.6 \leq x < 1$, $0 < y \leq 0.3$, $0 < z \leq 0.3$, and $x+y+z=1$, M may be at least one selected from among manganese (Mn), vanadium (V), magnesium (Mg), gallium (Ga), silicon (Si), tungsten (W), molybdenum (Mo), iron (Fe), chromium (Cr), copper (Cu) ), zinc (Zn), titanium (Ti), aluminum (Al), and boron (B), and A may be F, S, Cl, Br, or a combination thereof.

In Formula 7-1, for example, $0.7 \le x < 1$, $0 < y \le 0.3$, $0 < z \le 0.3$; $0.8 \le x < 1$, $0 < y \le 0.3$, $0 < z \le 0.3$; $0.8 \le x < 1$ , $0 < y \le 0.2$, $0 < z \le 0.2$; $0.83 \le x < 0.97$, $0 < y \le 0.15$, and $0 < z \le 0.15$; or $0.85 \le x < 0.95$, $0 < y \le 0.1$, and $0 < z \le 0.1$ may be satisfied.

For example, the lithium transition metal oxide may be at least one of compounds represented by Formulas 4-1 and 5-1:

Formula 4-1 $LiNi_xCo_yMn_zO_2$

In Formula 4-1, $0.6 \le x \le 0.95$, $0 < y \le 0.2$, and $0 < z \le 0.1$. For example, $0.7 \le x \le 0.95$, $0 < y \le 0.3$, and $0 < z \le 0.3$,

Formula 5-1 $LiNi_xCo_yAl_zO_2$

In Formula 5-1, $0.6 \le x \le 0.95$, $0 < y \le 0.2$, and $0 < z \le 0.1$. For example, $0.7 \le x \le 0.95$, $0 < y \le 0.3$, and $0 < z \le 0.3$. For example, $0.8 \le x \le 0.95$ and $0 < y \le 0.3$, and $0 < z \le 0.3$. For example, $0.82 \le x \le 0.95$, $0 < y \le 0.15$, and $0 < z \le 0.15$. For example, $0.85 \le x \le 0.95$, $0 < y \le 0.1$, and $0 < z \le 0.1$.

For example, the lithium transition metal oxide may be $LiNi_{0.6}Co_{0.2}Mn_{0.2}O_2$, $LiNi_{0.88}Co_{0.08}Mn_{0.04}O_2$, $LiNi_{0.8}Co_{0.15}Mn_{0.05}O_2$, $LiNi_{0.8}Co_{0.1}Mn_{0.1}O_2$, $LiNi_{0.88}Co_{0.1}Mn_{0.02}O_2$, $LiNi_{0.8}Co_{0.15}Al_{0.05}O_2$, $LiNi_{0.8}Co_{0.1}Mn_{0.2}O_2$, or $LiNi_{0.88}Co_{0.1}Al_{0.02}O_2$.

According to another embodiment, the positive electrode active material may include at least one active material selected from among Li-Ni-Co-Al (NCA), Li-Ni-Co-Mn (NCM), lithium cobalt oxide ($LiCoO_2$), lithium manganese oxide ($LiMnO_2$), lithium nickel oxide ($LiNiO_2$), and lithium iron phosphate ($LiFePO_4$).

The negative electrode active material may include at least one selected from among a silicon-based compound, a carbon-based compound, a composite of a silicon-based compound and a carbon-based compound, and a silicon oxide ($SiO_x$, $0<x<2$). The silicon-based compound may be a silicon particle, a silicon alloy particle, and the like.

The silicon-based compound may have a size of less than 200 nm, for example, a size of 10 nm to 150 nm. The term "size" as used herein refers to an average particle diameter if silicon particles in the silicon-based compound is spherical, and refers to an average major axis length if the silicon particles are non-spherical.

As excellent lifespan characteristics can be achieved when the size of the silicon-based compound is within the above ranges, when using an electrolyte according to an embodiment, the lifespan of a lithium secondary battery may be further improved.

The carbon-based material may be, for example, a crystalline carbon, an amorphous carbon, or a mixture thereof. Examples of the crystalline carbon may include graphite, including artificial graphite or natural graphite in non-shaped, plate, flake, spherical or fiber form. Examples of the amorphous carbon may include soft carbon (low-temperature calcined carbon) or hard carbon, mesophase pitch carbides, calcined cokes, and the like.

The composite of a silicon-based compound and a carbon-based compound may be a composite having a structure in which silicon nanoparticles are disposed on top of the carbon-based compound, a composite in which silicon particles are included on the surface and inside of the carbon-based compound, and a composite in which silicon particles are coated with the carbon-based compound and as such included inside the carbon-based compound. In the composite of a silicon-based compound and a carbon-based compound, the carbon-based compound may be graphite, graphene, a graphene oxide, or a combination thereof.

Examples of the composite of a silicon-based compound and a carbon-based compound may include an active material obtained by carbon-coating carbon-based compound particles after distributing thereon silicon nanoparticles having an average diameter of about 200 nm or less, an active material having silicon (Si) particles on top and inside of graphite, and the like. Secondary particles of the composite of a silicon-based compound and a carbon-based compound may have an average particle diameter of 5 μm to 20 μm. The silicon nanoparticles may have an average particle diameter of 5 nm or more, for example, 10 nm or more, for example, 20 nm or more, for example, 50 nm or more, or for example, 70 nm or more. The average particle diameter of the silicon nanoparticles may be 200 nm or less, 150 nm or less, 100 nm or less, 50 nm or less, 20 nm or less, or 10 nm or less. For example, the average particle diameter of the silicon nanoparticles may be from 100 nm to 150 nm.

The average particle diameter of secondary particles of the composite of a silicon-based compound and a carbon-based compound may be from 5 μm to 18 μm, for example, from 7 μm to 15 μm, or for example, from 10 μm to 13 μm.

As other examples of the composite of a silicon-based compound and a carbon-based compound, the porous silicon composite cluster disclosed in Korean Application Publication No. 10-2018-0031585, and the porous silicon composite cluster structure disclosed in Korean Application Publication No. 10-2018-0056395 may be used. Korean Application Publication No. 10-2018-0031586 and Korean Application Publication No. 10-2018-0056395 are incorporated by reference herein.

A silicon-carbon-based compound composite according to an embodiment may be a porous silicon composite cluster containing a porous core and a shell, the core including a porous silicon composite secondary particle and the

shell including second graphene disposed on the core, wherein the porous silicon composite secondary particle includes an aggregate of two or more silicon composite primary particles, wherein the silicon composite primary particles may include silicon; a silicon oxide ($SiO_x$) (O<x<2) positioned on the silicon; and first graphene positioned on the silicon oxide.

According to another embodiment, a silicon-carbon-based compound composite may include: a porous silicon composite cluster containing a porous silicon composite secondary particle, and a second carbon flake on at least one surface of the porous silicon composite secondary particle; and a carbon-based coating film including an amorphous carbon, positioned on the porous silicon composite cluster, wherein the porous silicon composite secondary particle includes an aggregate of two or more silicon composite primary particles, wherein the silicon composite primary particles may include silicon; a silicon oxide ($SiO_x$) (O<x<2) disposed on at least one surface of the silicon; and a first carbon flake on at least one surface of the silicon oxide, wherein the silicon oxide is present in the state of a film, a matrix, or a combination thereof.

The first carbon flake and second carbon flake may each be present in the state of a film, a particle, a matrix, or a combination thereof. The first carbon flake and second carbon flake may each be graphene, graphite, carbon fibers, graphene oxide, or the like.

The composite of a silicon-based compound and a carbon-based compound may be a composite having a structure in which silicon nanoparticles are positioned on top of the carbon-based compound, a composite in which silicon particles are included on the surface and inside of the carbon-based compound, and a composite in which silicon particles are coated with the carbon-based compound and thus included inside the carbon-based compound. In the composite of a silicon-based compound and a carbon-based compound, the carbon-based compound may be graphite, graphene, a graphene oxide, or a combination thereof.

The lithium secondary battery is not limited to any particular type and may include a lithium ion battery, a lithium ion polymer battery, a lithium sulfur battery, and the like.

The lithium secondary battery may be prepared as follows.

First, a positive electrode is prepared.

For example, a positive electrode active material composition containing a mixture of a positive electrode active material, a conductive material, a binder, and a solvent may be prepared. The positive electrode active material composition may be directly coated on a metal current collector to thereby form a positive electrode plate. Alternatively, the positive electrode active material composition may be cast on a separate support, and a film exfoliated from the support may be laminated on a metal current collector to thereby form a positive electrode plate. The positive electrode is not limited to the aforementioned types, and may be a type other than the aforementioned types.

For the positive electrode active material, any lithium-containing metal oxide commonly available in the art may be used without limitations. For example, the positive electrode active material may utilize at least one composite oxide of lithium with a metal selected from among cobalt, manganese, nickel, and a combination thereof. As a specific example, a compound represented by any one of the following formulas may be used: $Li_aA_{1-b}B^1{}_bD^1{}_2$ (in(in the formula, $0.90 \leq a \leq 1.8$ and $0 \leq b \leq 0.5$); $Li_aE_{1-b}B^1{}_bO_{2-c}D^1{}_c$ (in(in the formula, $0.90 \leq a \leq 1.8$, $0 \leq b \leq 0.5$, and $0 \leq c \leq 0.05$); $LiE_{2-b}B^1{}_bO_{4-c}D^1{}_c$ (in(in the formula, $0 \leq b \leq 0.5$ and $0 \leq c \leq 0.05$); $Li_aNi_{1-b-c}Co_bB^1{}_cD^1{}_\alpha$ (in the formula, $0.90 \leq a \leq 1.8$, $0 \leq b \leq 0.5$, $0 \leq c \leq 0.05$, and $0 < \alpha \leq 2$); $Li_aNi_{1-b-c}Co_bB^1{}_cO_{2-\alpha}F^1{}_\alpha$ (in the formula, $0.90 \leq a \leq 1.8$, $0 \leq b \leq 0.5$, $0 \leq c \leq 0.05$, and $0 < \alpha < 2$); $Li_aNi_{1-b-c}Co_bB^1{}_cO_{2-\alpha}F^1{}_2$ (in the formula, $0.90 \leq a \leq 1.8$, $0 \leq b \leq 0.5$, $0 \leq c \leq 0.05$, and $0 < \alpha < 2$); $Li_aNi_{1-b-c}Mn_bB^1{}_cD_\alpha$ (in the formula, $0.90 \leq a \leq 1.8$, $0 < b \leq 0.5$, $0 \leq c \leq 0.05$, and $0 < \alpha \leq 2$); $Li_aNi_{1-b-c}Mn_bB^1O_{2-\alpha}F^1{}_\alpha$ (in the formula, $0.90 \leq a \leq 1.8$, $0 \leq b \leq 0.5$, $0 \leq c \leq 0.05$, and $0 < \alpha < 2$); $Li_aNi_{1-b-c}Mn_bB^1{}_cO_{2-\alpha}F^1{}_2$ (in the formula, $0.90 \leq a \leq 1.8$, $0 \leq b \leq 0.5$, $0 \leq c \leq 0.05$, and $0 < \alpha < 2$); $Li_aNi_bE_cG_dO_2$ (in the formula, $0.90 \leq a \leq 1.8$, $0 \leq b \leq 0.9$, $0 \leq c \leq 0.5$, and $0.001 \leq d \leq 0.1$.); $Li_aNi_bCo_cMn_dGeO_2$ (in the formula, $0.90 \leq a \leq 1.8$, $0 \leq b \leq 0.9$, $0 \leq c \leq 0.5$, $0 \leq d \leq 0.5$, and $0.001 \leq e \leq 0.1$.); $Li_aNiG_bO_2$ (in the formula, $0.90 \leq a \leq 1.8$ and $0.001 \leq b \leq 0.1$.); $Li_aCoG_bO_2$ (in the formula, $0.90 \leq a \leq 1.8$ and $0.001 \leq b \leq 0.1$.); $Li_aMnG_bO_2$ (in the formula, $0.90 \leq a \leq 1.8$ and $0.001 \leq b \leq 0.1$.); $Li_aMn_2G_bO_4$ (in the formula, $0.90 \leq a \leq 1.8$ and $0.001 \leq b \leq 0.1$.); $QO_2$; $QS_2$; $LiQS_2$; $V_2O_5$; $LiV_2O_5$; $LiIO_2$; $LiNiVO_4$; $Li_{(3-f)}J_2(PO_4)_3$($0 \leq f \leq 2$); $Li_{(3-f)}Fe_2(PO_4)_3$ ($0 \leq f \leq 2$); and $LiFePO_4$.

In the formulas above, A may be Ni, Co, Mn, or a combination thereof; $B^1$ may be Al, Ni, Co, Mn, Cr, Fe, Mg, Sr, V, a rare-earth element, or a combination thereof; $D^1$ may be O, F, S, P, or a combination thereof; E may be Co, Mn, or a combination thereof; $F^1$ may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof.

For example, the positive electrode active material may be $LiCoO_2$, $LiMn_xO_{2x}$ (x=1, 2), $LiNi_{1-x}Mn_xO_{2x}$ (0<x<1), $LiNi_{1-x-y}Co_xMn_yO_2$ ($0 \leq x \leq 0.5$, $0 \leq y \leq 0.5$), $LiFePO_4$, or the like.

Needless to say, any of the aforementioned compounds that has a coating layer on a surface thereof may be used, or a mixture of any one of the aforementioned compounds and a compound having a coating layer may also be used. This coating layer may include a coating element compound, such as an oxide and a hydroxide of a coating element, oxyhydroxide of a coating element, an oxycarbonate of a coating element, and a hydroxycarbonate of a coating element. A compound forming these coating layers may be amorphous or crystalline. The coating element included in

the coating layer may include Mg, Al, Co, K, Na, Ca, Si, Ti, V, Sn, Ge, Ga, B, As, Zr, or a mixture thereof. For the process of forming the coating layer, any coating method that is capable of coating the above compound by using such elements, without adversely affecting the physical properties of positive electrode active material may be used without limitation (e.g., spray coating, precipitation, etc.). Since such methods are commonly understood by those skilled in the art, and therefore will not be described in further detail.

Examples of the conductive material include carbon black, graphite powder, and the like. However, the conductive material is not limited to the aforementioned components and may be any conductive material available in the art.

For the binder, a vinylidene fluoride/hexafluoropropylene copolymer, polyvinylidene fluoride (PVDF), polyacrylonitrile, polymethyl methacrylate, polytetrafluoroethylene, and a mixture thereof, or a styrene butadiene rubber-based polymer, etc. may be used. However, the binder is not limited to the aforementioned components and may be any binder available in the art.

For the solvent, N-methyl pyrrolidone, acetone, or water, etc. may be used. However, the solvent is not limited to the aforementioned components and may be any solvent available in the art.

The content of each of the positive electrode active material, the conductive material, the binder, and the solvent may be at a level that is commonly used in lithium batteries. Depending on the use and configuration of a lithium battery, one or more of the conductive material, the binder, and the solvent may be omitted.

Next, a negative electrode is prepared.

For example, a negative electrode active material composition may be prepared by combining a negative electrode active material, a conductive material, a binder, and a solvent. The negative electrode active material composition may be directly coated and dried on a metal current collector to thereby form a negative electrode plate. Alternatively, the negative electrode active material composition may be cast on a separate support, and a film exfoliated from the support may be laminated on a metal current collector to thereby form a negative electrode plate.

The negative electrode active material may be any material available in the art as a negative electrode active material of a lithium battery. For example, the negative electrode active material may include one or more selected from among lithium metal, a metal alloyable with lithium, a transition metal oxide, a non-transition metal oxide, and a carbon-based material.

Examples of the metal alloyable with lithium may include Si, Sn, Al, Ge, Pb, Bi, Sb, a Si-Y alloy (wherein Y is an alkali metal, an alkaline earth metal, an element in Group 13, an element in Group 14, a transition metal, a rare-earth metal, or a combination thereof, but not Si), a Sn-Y alloy (wherein Y is an alkali metal, an alkaline earth metal, an element in Group 13, an element in Group 14, a transition metal, a rare-earth metal, or a combination thereof, but not Sn), and the like. Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

For example, the transition metal oxide may be a lithium titanium oxide, a vanadium oxide, a lithium vanadium oxide, and the like.

For example, the non-transition metal oxide may be $SnO_2$, $SiO_x$ ($0<x<2$), and the like.

The carbon-based material may be, for example, a crystalline carbon, an amorphous carbon, or a mixture thereof. Examples of the crystalline carbon may include graphite, including artificial graphite or natural graphite in non-shaped, plate, flake, spherical or fiber form, and examples of the amorphous carbon may include soft carbon (low-temperature calcined carbon) or hard carbon, mesophase pitch carbides, calcined cokes, and the like.

The negative electrode active material composition may utilize the same conductive material and binder as in the positive electrode active material composition above.

The negative electrode active material, the conductive material, the binder, and the solvent are each used in an amount commonly used in lithium batteries. Depending on the use and configuration of a lithium battery, one or more of the conductive material, the binder, and the solvent may be omitted.

Next, a separator to be placed between the positive electrode and the negative electrode may be prepared.

For the separator, any separator commonly used in lithium batteries may be utilized. Any separator capable of retaining a large quantity of electrolyte solution while exhibiting low resistance to ion migration in the electrolyte solution may be used. For example, the separator may be any material selected from among glass fiber, polyester, Teflon, polyethylene, polypropylene, polytetrafluoroethylene (PTFE), and a combination thereof. In addition, the separator may be in the form of nonwoven fabric or woven fabric. For example, a lithium ion battery may include a rollable separator formed of polyethylene, polypropylene, or the like, and a lithium ion polymer battery may include a separator which has an excellent impregnation ability with respect to an organic electrolyte solution. For example, the separator may be prepared as follows.

A separator composition may be prepared by mixing a polymer resin, a filler, and a solvent. The separator composition may be directly coated and dried on top of an electrode to thereby form a separator. Alternatively, the separator composition may be cast and dried on a support, and a separator film exfoliated from the support may be laminated on top of an electrode to thereby form a separator.

The polymer resin for use in the preparation of the separator above is not limited to any particular material, and

any material used for a binder of an electrode may be used. For example, a vinylidene fluoride/hexafluoropropylene copolymer, polyvinylidene fluoride (PVDF), polyacrylonitrile, polymethyl methacrylate, or a mixture thereof may be used as the polymer resin.

*192 Next, the above-described electrolyte solution may be prepared.

As shown in FIG. 1, a lithium battery 1 includes a positive electrode 3, a negative electrode 2, and a separator 4. The positive electrode 3, the negative electrode 2, and the separator 4 may be wound or folded so as to be accommodated in a battery case 5. Then, the battery case 5 may be injected with an organic electrolyte solution and sealed with a cap assembly 6 to thereby form a lithium secondary battery 1. The battery case may be a cylindrical type, a rectangular type, a thin-film type, and the like. For example, the lithium battery may be a large-scale thin film-type battery. The lithium battery may be a lithium ion battery.

A separator may be disposed between the positive electrode and the negative electrode, to thereby form a battery structure. The battery structures may be laminated in a bi-cell structure, and immersed in a liquid organic electrolyte, and the resulting product may be accommodated and sealed in a pouch, to thereby form a lithium-ion polymer battery.

In addition, a plurality of the battery structures may be stacked together to form a battery pack, and such a battery pack may be used in any and all devices that require high capacity and high output. For example, such a battery pack may be used in a laptop computer, a smartphone, an electric vehicle, and the like.

A lithium secondary battery according to an embodiment has a significantly reduced DCIR increase compared to lithium secondary batteries employing a common nickel-rich lithium nickel composite oxide as the positive electrode active material, and thus may achieve excellent battery characteristics.

A lithium secondary battery employing the positive electrode, negative electrode, and electrolyte may have a driving voltage that has a lower limit of 2.5 V to 2.8 V, and an upper limit of 4.1 V or more, for example, of 4.1 V to 4.45 V.

In addition, the lithium secondary battery may be used in, without being limited to: power tools operated by electric motors; electric vehicles including an electric vehicle (EV), a hybrid electric vehicle (HEV), a plug-in hybrid electric vehicle (PHEV), and the like; electric two-wheeled vehicles including an electric bicycle (E-bike), an electric scooter (Escooter), and the like; an electric golf cart; and power storage systems and the like.

The term "alkyl group" as used herein refers to a branched or unbranched aliphatic hydrocarbon group. In an embodiment, an alkyl group may be unsubstituted and substituted. Examples of the alkyl group include, without being limited to a methyl group, an ethyl group, a propyl group, an isopropyl group, a butyl group, an isobutyl group, tert-butyl group, a pentyl group, a hexyl group, a cyclopropyl group, a cyclopentyl group, a cyclohexyl group, a cycloheptyl group, and the like, and the alkyl group may be optionally substituted in other embodiments. In another embodiment, an alkyl group may contain 1 to 6 carbon atoms. For examples, an alkyl group having 1 to 6 carbon atoms may be a methyl group, an ethyl group, a propyl group, an isopropyl group, a butyl group, an iso-butyl group, a sec-butyl group, a pentyl group, a 3-pentyl group, a hexyl group, and the like, but is not necessarily limited thereto.

One or more hydrogen atoms in the alkyl group may be substituted with a halogen atom, a C1-C20 alkyl group (examples: $CF_3$, $CHF_2$, $CH_2F$, $CCl_3$, etc.), C1-C20 alkoxy group, C2-C20 alkoxyalkyl group, a hydroxy group, a nitro group, a cyano group, an amino group, an amidino group, hydrazine, hydrazone, carboxylic group or a salt thereof, a sulfonyl group, a sulfamoyl group, a sulfonate group or a salt thereof, phosphorus acid or a salt thereof, or a C1-C20 alkyl group, a C2-C20 alkenyl group, a C2-C20 alkynyl group, a C1-C20 heteroalkyl group, a C6-C20 aryl group, a C7-C20 arylalkyl group, a C6-C20 heteroaryl group, a C7-C20 hetero aryl alkyl group, a C6-C20 heteroaryloxy group, or a C6-C20 heteroaryloxyalkyl group.

In the present specification, "alkenyl group" refers to a hydrocarbon group having 2 to 20 carbon atoms and including at least one carbon-carbon double bond, and includes but is not limited to, an ethenyl group, 1-propenyl group, 2-propenyl group, 2-methyl-1-propenyl group, 1-butenyl group, 2-butenyl group, a cyclopropenyl group, a cyclopentenyl, a cyclohexenyl group, a cyclopentenyl group, and the like. In another embodiment, an alkenyl group may be substituted or unsubstituted. In another embodiment, the number of carbon atoms in an alkenyl group may be 2 to 40.

In the present specification, the term "alkynyl group" refers to a hydrocarbon group having 2 to 20 carbon atoms and including at least one carbon-carbon triple bond, and includes but is not limited to, an ethynyl group, 1-propynyl group, 1-butynyl group, 2-butynyl group, and the like. In another embodiment, the alkynyl group may be substituted or unsubstituted. In another embodiment, the alkynyl group may have 2 to 40 carbon atoms.

As used herein, a substituent group is derived from an unsubstituted parent group, of which one or more hydrogen atoms are substituted with a different atom or functional group. Unless otherwise indicated, when a functional group is described as being "substituted", this means that the functional group is substituted with one or more substituents, each independently selected from among a $C_{1-}C_{20}$ alkyl group, a $C_{2-}C_{20}$ alkenyl group, a $C_{2-}C_{20}$ alkynyl group, a $C_{1-}C_{20}$ alkoxy group, a halogen, a cyano group, a hydroxy group, and a nitro group. If a functional group is described as "optionally substituted", the functional group may be substituted with any one of the aforementioned substituents.

The term "halogen" as used herein includes fluorine, bromine, chlorine, iodine, and the like.

"Alkoxy" refers to "alkyl-O-", wherein the alkyl is as described above. Examples of the alkoxy group include a methoxy group, an ethoxy group, a 2-propoxy group, a butoxy group, a t-butoxy group, a pentyloxy group, a hexyloxy group, and the like. One or more hydrogen atoms in the alkoxy group may be substituted with the same substituents as described above with respect to the alkyl group.

"Heteroaryl" refers to a monocyclic or bicyclic organic group containing one or more heteroatoms selected from among N, O, P, and S, wherein the rest of ring atoms are carbon. The heteroaryl group may include, for example, 1-5 heteroatoms, and may include 5-10 ring members. The S or N may be oxidized to have various oxidation states.

Examples of "heteroaryl" include thienyl, furyl, pyrrolyl, imidazolyl, pyrazolyl, thiazolyl, isothiazolyl, 1,2,3-oxadiazolyl, 1,2,4-oxadiazolyl, 1,2,5-oxadiazolyl, 1,3,4-oxadiazolyl group, 1,2,3-thiadiazolyl, 1,2,4-thiadiazolyl, 1,2,5- thiadiazolyl, 1,3,4-thiadiazolyl, isothiazol-3-yl, isothiazol-4-yl, isothiazol-5-yl, oxazol-2-yl, oxazol-4- yl, oxazol-5-yl, isoxazol-3-yl, isoxazol-4-yl, isoxazol-5-yl, 1,2,4-triazol-3-yl, 1,2,4-triazol-5-yl, 1,2,3-triazol-4-yl, 1,2,3-triazol-5-yl, tetrazolyl, pyrid-2-yl, pyrid-3-yl, 2-pyrazin-2-yl, pyrazin-4-yl, pyrazin-5-yl, 2-pyrimidin-2-yl, 4-pyrimidin-2-yl, and 5-pyrimidin-2-yl.

The term "heteroaryl" includes cases in which a hetero aromatic ring is optionally fused with at least one aryl, cycloaliphatic, or heterocycle.

The term "carbon ring" refers to a saturated or partially unsaturated nonaromatic monocyclic, bicyclic, or tricyclic hydrocarbon group.

Examples of the monocyclic hydrocarbon include a cyclopentyl group, a cyclopentenyl group, a cyclohexyl group, a cyclohexenyl group, and the like.

Examples of the bicyclic hydrocarbon may include bornyl, decahydronaphthyl, bicyclo[2.1.1]hexyl, bicyclo[2.2.1]heptyl, bicyclo[2.2.1]heptenyl, or bicyclo[2.2.2]octyl.

*212 Examples of the tricyclic hydrocarbon may include adamantyl and the like.

One or more hydrogen atoms in the carbon ring may be substituted with the substituents as described above with respect to the alkyl group.

The present disclosure will be described in greater detail through Examples and Comparative Examples below. However, it will be understood that the Examples are only for illustrating the present disclosure, and are not to be construed as limiting the scope of the present disclosure.

(Preparation of Lithium Secondary Battery)

Example 1

1.5 M $LiPF_6$ and vinylene carbonate were added to a mixed solvent containing ethylene carbonate (EC), ethyl methyl carbonate (EMC), and dimethyl carbonate (DMC) in a volume ratio of 20:10:70. Then, 0.1 wt% of the compound represented by Formula 9 with respect to the total weight of the electrolyte was added to the resulting mixture, thereby completing the preparation of an electrolyte for a lithium secondary battery. The compound represented by Formula 9 was synthesized by a preparation method disclosed in Energy & Fuels 1991, 5, 786-791.

Formula 9

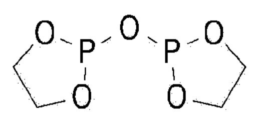

97 wt% of $LiNi_{0.8}Co_{0.1}Al_{0.1}O_2$ as a positive electrode active material, 0.5 wt% of artificial graphite powder as a conductive material, 0.8 wt% of carbon black, 0.2 wt% of a modified acrylonitrile rubber, and 1.5 wt% of polyvinylidene fluoride were mixed together, and the resulting mixture was added to N-methyl-2-pyrrolidone, and stirred for 30 minutes using a mechanical stirrer, thereby completing the preparation of a positive electrode active material slurry. The slurry was applied, using a doctor blade, onto a 20 μm-thick aluminum current collector to a thickness of about 60 μm, and the coated current collector was dried in a hot-air dryer at 100 °C for 0.5 hours, followed by further drying in vacuum at 120 °C for 4 hours, and roll-pressed, thereby completing the manufacture of a positive electrode.

Artificial graphite as a negative electrode active material, and polyvinylidene fluoride as a binder were mixed in a weight ratio of 98:2, and the mixture was dispersed in N-methyl pyrrolidone, thereby completing the preparation of a negative electrode active material slurry. The slurry was applied, using a doctor blade, onto a 10 μm-thick copper

current collector to a thickness of about 60 μm, and the coated current collector was dried in a hot-air dryer at 100 °C for 0.5 hours, followed by further drying in vacuum at 120 °C for 4 hours, and roll-pressed, thereby completing the preparation of a negative electrode.

Using the positive electrode and negative electrode prepared above, a polyethylene separator having a thickness of 14 μm, and the electrolyte, a lithium secondary battery was prepared.

Examples 2 to 5

A lithium secondary battery was prepared following the same process as Example 1, except that the content of the compound represented by Formula 1 was modified to 0.5 wt%, 1.0 wt%, 2.0 wt%, and 10 wt%, respectively.

Comparative Example 1

A lithium secondary battery was prepared following the same process as Example 1, except that an electrolyte not containing the compound represented by Formula 9 was used.

Comparative Example 2

A lithium secondary battery was prepared following the same process as Example 1, except that an electrolyte containing only 1.0 wt% of a compound represented by Formula 9-1 was used. The compound represented by Formula 9-1 was synthesized by the synthesis method disclosed in the article (Heteroatom Chemistry 2010, 21, 515-520).

Formula 9-1

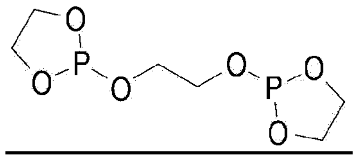

Comparative Example 3

A lithium secondary battery was prepared following the same process as Example 1, except that an electrolyte containing only 1.0 wt% of a compound represented by Formula 9-2 was used. The compound represented by Formula 9-2 was synthesized by the synthesis method disclosed in Korean Application Publication No. 10-2015-075052.

Formula 9-2

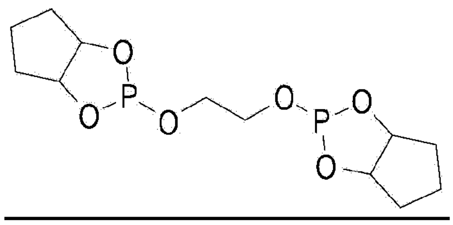

Evaluation Example 1: Evaluation on Initial DC-IR at High-Temperature (60 °C) and DC-IR Increase after High-Temperature Storage

The lithium secondary batteries prepared in Examples 1 to 4 and Comparative Example 1 were subjected to charging conditions of 0.2 C and 4.2 V at 25 °C and stored in an oven at 60 °C for 30 days, and then DC-IR was measured to evaluate resistance increase before and after the storage. The results of the evaluation are shown in Table 1 below. In addition, the initial DC-IR before the storage was measured and then the resistance after 30-day storage at a high temperature (60 °C) was measured to calculate DC-IR change (%) according to Equation 1 below.

Equation 1

$$\text{DC-IR Change} = [\text{DCIR(60d.)}]/\text{DCIR(0d.)} \times 100\%$$

In Equation 1, DCIR(60d.) represents DCIR after 60 days, and DCIR(0d.) represents DCIR right before the storage.

The results of initial DC-IR and DC-IR after high-temperature storage measurements, and resistance changes are shown in Table 1. Table 1 below shows DC-IR changes over storage days.

[Table 1]

| Item | Content of Additive (wt%) | Initial DC-IR (mΩ) | DC-IR after 30-day storage at 60 °C (mΩ) | |
|---|---|---|---|---|
| | | | | Resistance change (%) |
| Example 1 | 0.1 | 19.23 | 26.21 | 136.3 |
| Example 2 | 0.5 | 19.11 | 25.98 | 135.9 |
| Example 3 | 1.0 | 19.07 | 25.77 | 135.1 |
| Example 4 | 2.0 | 19.17 | 26.18 | 136.6 |
| Compara tive Example 1 | 0 | 19.36 | 26.84 | 138.6 |

As shown in Table 1, the lithium secondary batteries of Examples 1 to 4, when stored at a high temperature for a long period of time, show a low DC-IR value and a reduced DC-IR increase upon high-temperature storage, compared to those of the lithium secondary battery of Comparative Example 1 that does not contain the compound of Formula 1. In addition, the lithium secondary batteries of Example 3 and Comparative Examples 2 and 3 were evaluated for initial DC-IR at high temperature (60 °C) and DC-IR increase after high-temperature storage. The results of the evaluation are shown in Table 2 and FIG. 2.

[Table 2]

| Item | Content of Additive (wt%) | Initial DC-IR (mΩ) | DC-IR after 30-day storage at 60 °C (mΩ) | |
|---|---|---|---|---|
| | | | | Resistance change (%) |
| Example 3 | 1.0 | 19.07 | 25.77 | 135.1 |
| Comparati ve Example 2 | 1.0 | 19.53 | 26.65 | 136.5 |
| Comparati ve Example 3 | 1.0 | 20.05 | 27.42 | 136.8 |

As shown in Table 2 and FIG. 2, compared to the lithium secondary batteries of Comparative Examples 2 and 3, the lithium secondary battery of Example 3 shows a lower initial DC-IR value and a lower DC-IR value upon high-temperature storage, and also shows a reduced DC-IR increase.

Evaluation 2: Evaluation on Gas Generation Amount upon High-Temperature Storage

The lithium secondary batteries prepared in Examples 1-5 and Comparative Example 1 were each charged at a constant current of 0.2 C at 25 °C until the battery voltage reached 4.4 V and then, the charging was cut-off at a current of 0.05 C rate while maintaining a constant voltage mode at 4.40 V. Each charged battery was stored in an oven at 85 °C for 8 hours. Change in mass resulting from a volume change of a pouch was calculated using the Archimedes' method, and the results thereof are shown in Table 3.

In particular, the electrolyte solution was a solution in which 1.5 M $LiPF_6$ was dissolved in a mixed solvent containing EC (ethylene carbonate), DEC (diethyl carbonate), and EMC (ethyl methyl carbonate) (in 2:4:4 volume ratio).

The Archimedes' method is a method of measuring the amount of gas generated, by periodically (e.g., 4 days) weighing the pouch in a water tank filled with water and converting a change in weight to a volume.

[Table 3]

| Item | Content of Additive (wt%) | Amount of gas generated (ml) upon 85 °C storage |
|---|---|---|
| Example 1 | 0.1 | 0.172 |
| Example 2 | 0.5 | 0.122 |
| Example 3 | 1.0 | 0.113 |
| Example 4 | 2.0 | 0.095 |
| Example 5 | 10 | 0.068 |
| Comparative Example 1 | 0 | 0.182 |

Referring to Table 3, the lithium secondary batteries of Examples 1-5 show a reduced amount of gas generated compared to that of the lithium secondary battery of Comparative Example 1.

Evaluation Example 3: Evaluation on High-Temperature (60 °C) Lifespan Characteristics

The lithium batteries prepared in Example 1 and Comparative Examples 1 to 9 were each charged at a constant current of 0.5 C rate at 60 °C until the battery voltage reached 4.2 V (vs. Li) and then, in a constant voltage mode, the charging was cut-off at current of 0.05 C rate while maintaining a constant voltage mode at 4.2 V. Subsequently, each battery was discharged at a constant current of 1.0 C rate until the battery voltage reached 2.8 V (vs. Li). This charge-discharge cycle was repeated 300 times.

In all charge-discharge cycles above, a rest period of 10 minutes was provided after each charge/discharge cycle.

Each battery was evaluated for lifespan characteristics at a high temperature, and capacity retention ratios at $150^{th}$ and $300^{th}$ cycles. The results thereof are shown in Table 3. Capacity retention ratio at the 300th cycle is defined by Equation 2 below.

Equation 2

$$\text{Capacity retention ratio} = [\text{Discharge capacity at } 300^{th} \text{ cycle} / \text{Discharge capacity at } 1^{st} \text{ cycle}] \times 100$$

The results of the capacity retention ratio evaluation are as shown in Table 4 below.

[Table 4]

| Item | Capacity retention ratio (%) | |
|---|---|---|
| | 150 Cycle | 300 Cycle |
| Example 1 | 98 | 94 |
| Example 2 | 99 | 95 |
| Example 3 | 99 | 95 |
| Example 4 | 99 | 95 |
| Example 5 | 99 | 94 |
| Comparative Example 1 | 98 | 92 |

From the results of the charge-discharge characteristics evaluation, it was found that as shown in Table 4, the lithium secondary batteries of Examples 1-5 show improved lifespan characteristics at a high temperature compared to the lithium secondary battery of Comparative Example 1.As shown in the results of Evaluation Examples 1 to 3 described above, the lithium secondary battery employing the electrolyte disclosed herein was found to have improved gas reduction effects due to decreased initial resistance.

Although one or more embodiments have been described with reference to the drawings and examples, these embodiments are merely exemplary, and those skilled in the art shall understand that various modifications and equivalent

other embodiments are possible therefrom. Accordingly, the scope of the present inventive concept shall be defined by the appended claims.

## Claims

1. An electrolyte for a lithium secondary battery, the electrolyte comprising:

a lithium salt; an organic solvent; and a compound represented by Formula 1:

Formula 1

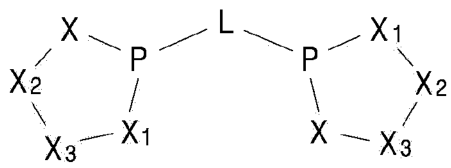

wherein, in Formula 1, L is $-C(R_1)(R_2)-$, $-N(R_1)-$, O, S, or $-C(=O)-$,
X and $X_1$ are each independently O, S, or $-S(=O)-$,
$X_2$ is $-\{C(R_3)(R_4)\}_n-$ or $-C=N-R_1$, and
$X_3$ is $-\{C(R_3)(R_4)\}_m-$ or $-C=N-R_1$,
wherein $R_1$ to $R_4$ are each independently hydrogen, a cyano group, an unsubstituted or substituted C1-C20 alkyl group, an unsubstituted or substituted C1-C20 alkoxy group, an unsubstituted or substituted C2-C20 alkenyl group, an unsubstituted or substituted C2-C20 alkynyl group, an unsubstituted or substituted C2-C20 alkynyl group, an unsubstituted C3-C20 cycloalkyl group, an unsubstituted or substituted C6-C20 aryl group, or an unsubstituted or substituted C2-C20 heteroarylene group, or at least one of $R_1$ and $R_4$ and at least one of $R_3$ and $R_4$ are connected to form a ring, and
n and m are each independently an integer of 1 to 4.

2. The electrolyte of claim 1, wherein the compound represented by Formula 1 is a compound represented by Formula 2 below:

Formula 2

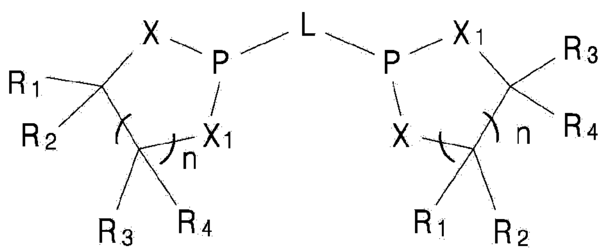

wherein, in Formula 2, L is $-C(R_1)(R_2)-$, $-N(R_1)-$, O, S, or $-C(=O)-$,
X and $X_1$ are each independently O, S, or $-S(=O)-$, and
$X_2$ is $-\{C(R_3)(R_4)\}_n-$,
wherein $R_1$ to $R_4$ are each independently hydrogen, a cyano group, an unsubstituted or substituted C1-C20 alkyl group, an unsubstituted or substituted C1-C20 alkoxy group, an unsubstituted or substituted C2-C20 alkenyl group, an unsubstituted or substituted C2-C20 alkynyl group, an unsubstituted or substituted C2-C20 alkynyl group, an unsubstituted C3-C20 cycloalkyl group, an unsubstituted or substituted C6-C20 aryl group, or an unsubstituted or substituted C2-C20 heteroarylene group, or at least one of $R_1$ and $R_4$ and at least one of $R_3$ and $R_4$ are connected to form a ring, and
n is an integer of 1 to 4.

3. The electrolyte of claim 1, wherein the compound represented by Formula 1 is a compound represented by Formula

3 below:

Formula 3

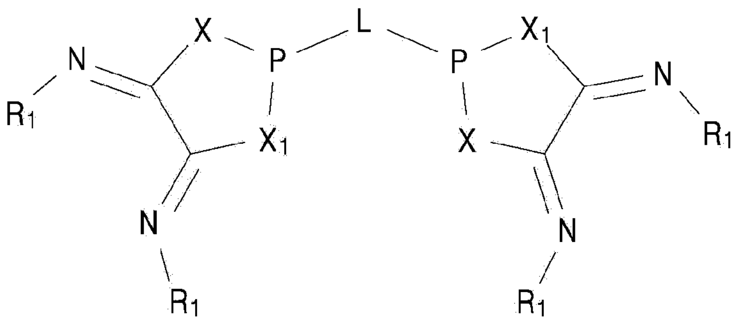

wherein, in Formula 3, L is $-C(R_1)(R_2)-$, $-N(R_1)-$, O, S, or -C(=O)-,
X and $X_1$ are each independently O, S, or -S(=O)-, and
$X_2$ is $-\{C(R_3)(R_4)\}_n-$,
wherein $R_1$ to $R_4$ are each independently an unsubstituted or substituted C1-C20 alkyl group, an unsubstituted or substituted C1-C20 alkoxy group, an unsubstituted or substituted C2-C20 alkenyl group, an unsubstituted or substituted C2-C20 alkynyl group, an unsubstituted or substituted C2-C20 alkynyl group, an unsubstituted C3-C20 cycloalkyl group, an unsubstituted or substituted C6-C20 aryl group, or an unsubstituted or substituted C2-C20 heteroaryl group.

**4.** The electrolyte of claim 1, wherein the compound represented by Formula 1 is a compound represented by Formula 4 below:

Formula 4

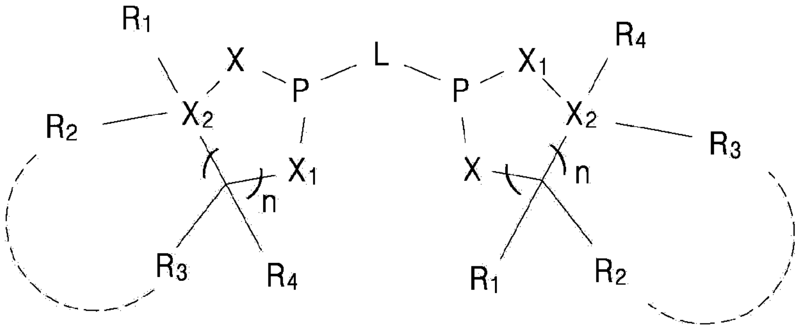

wherein, in Formula 4, L is $-C(R_1)(R_2)-$, $-N(R_1)-$, O, S, or -C(=O)-,
X and $X_1$ are each independently O, S, or -S(=O)-, and
$X_2$ is $-C(R_3)-$,
wherein $R_1$ and $R_4$ are each independently hydrogen, a cyano group, an unsubstituted or substituted C1-C20 alkyl group, an unsubstituted or substituted C1-C20 alkoxy group, an unsubstituted or substituted C2-C20 alkenyl group, an unsubstituted or substituted C2-C20 alkynyl group, an unsubstituted or substituted C2-C20 alkynyl group, an unsubstituted C3-C20 cycloalkyl group, an unsubstituted or substituted C6-C20 aryl group, or an unsubstituted or substituted C2-C20 heteroaryl group,
$R_2$ and $R_3$ are each an unsubstituted or substituted C1-C20 alkylene group, an unsubstituted or substituted C2-C20 alkenylene group, an unsubstituted or substituted C2-C20 alkynylene group, an unsubstituted or substituted C3-C20 cycloalkylene group, an unsubstituted or substituted C6-C20 arylene group, or an unsubstituted or substituted C2-C20 heteroarylene group, and
n is an integer of 1 to 4.

**5.** The electrolyte of claim 1, wherein a content of the compound represented by Formula 1 is in a range of 0.05 wt% to 20 wt% with respect to the total weight of the electrolyte.

6. The electrolyte of claim 1, wherein a content of the compound represented by Formula 1 is in a range of 0.1 wt% to 10 wt% with respect to the total weight of the electrolyte.

7. The electrolyte of claim 1, wherein the compound represented by Formula 1 is selected from among compounds represented by Formulas 5 to 8:

Formula 5

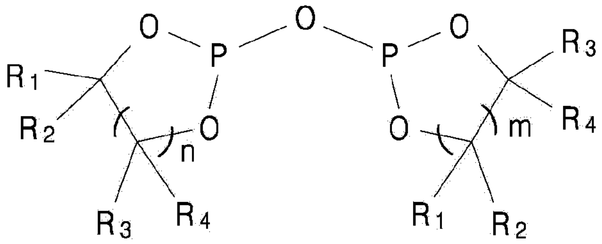

wherein, in Formula 5, $R_1$ to $R_4$ are each hydrogen, a C1-C20 alkyl group, or a C6-C20 aryl group, and n and m are each independently an integer of 1 to 4,

Formula 6

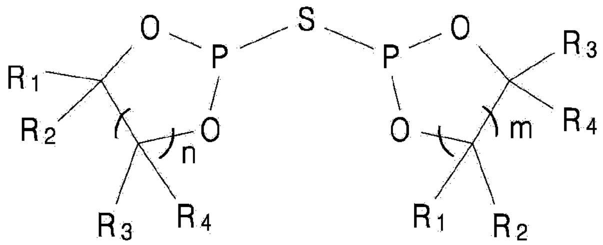

wherein, in Formula 6, $R_1$ to $R_4$ are each hydrogen, a C1-C20 alkyl group, or a C6-C20 aryl group, and n and m each independently are an integer of 1 to 4,

Formula 7

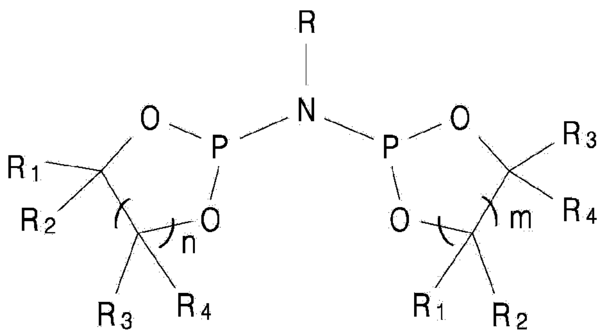

wherein, in Formula 7, $R_1$ to $R_4$ are each hydrogen, a C1-C20 alkyl group, or a C6-C20 aryl group,
R is hydrogen, a C1-C20 alkyl group, or a C6-C20 aryl group, and
n and m are each independently an integer of 1 to 4,

Formula 8

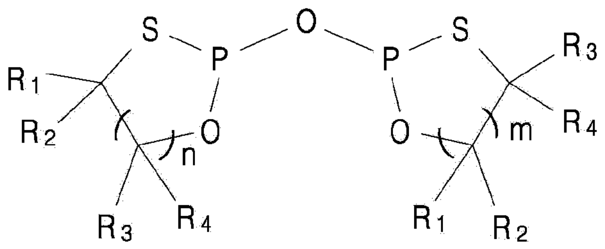

wherein, in Formula 8, $R_1$ to $R_4$ are each hydrogen, a C1-C20 alkyl group, or a C6-C20 aryl group, and n and m are each independently an integer of 1 to 4.

**8.** The electrolyte of claim 1, wherein the compound represented by Formula 2 is a compound selected from among compounds represented by Formulas 9 to 19.

Formula 9

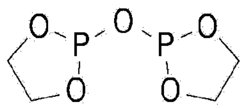

Formula 10

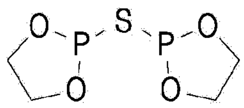

Formula 11

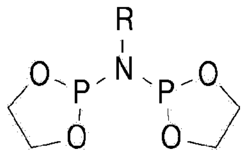

Formula 12

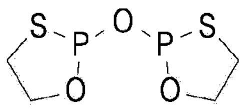

Formula 13

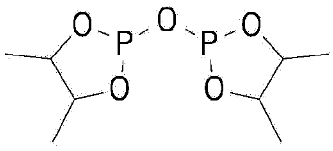

Formula 14

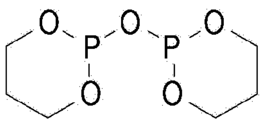

Formula 15

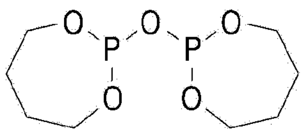

Formula 16

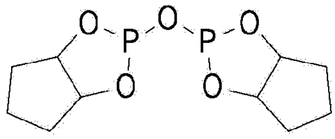

Formula 17

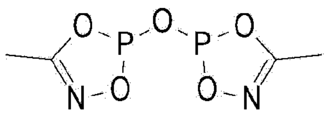

Formula 18

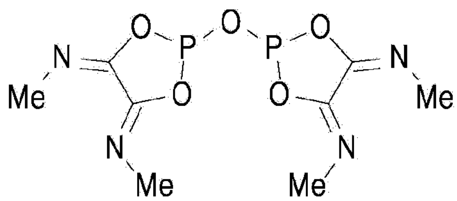

wherein, in Formula 18, Me represents a methyl group,
Formula 19

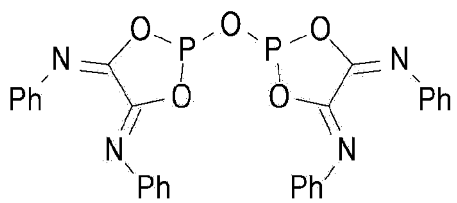

wherein, in Formula 19, Ph represents a phenyl group.

**9.** The electrolyte of claim 1, wherein the lithium salt comprises one or more selected from among $LiPF_6$, $LiBF_4$, $LiSbF_6$, $LiAsF_6$, $LiClO_4$, LiCFsSOs, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ ($2 \leq x \leq 20$, $2 \leq y \leq 20$), LiCl, LiI, lithium bis(oxalato)borate (LiBOB), $LiPO_2F_2$, and compounds represented by Formulas 21 to 24:

Formula 21

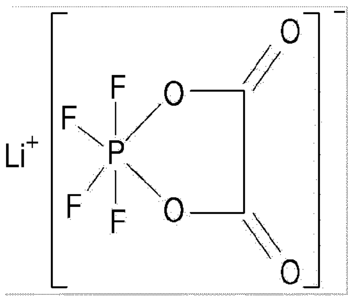

Formula 22

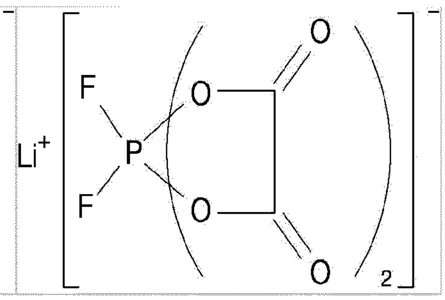

Formula 23

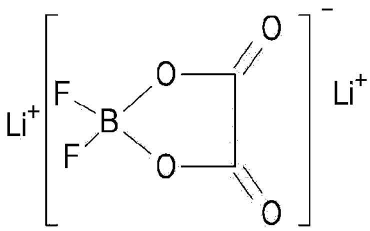

Formula 24

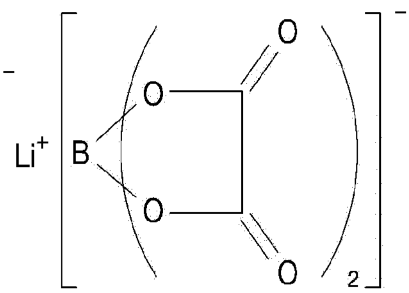

.

**10.** The electrolyte of claim 1, wherein a concentration of the lithium salt is from 0.01 M to 5.0 M.

**11.** The electrolyte of claim 1, wherein the organic solvent comprises at least one selected from among ethyl methyl carbonate (EMC), methyl propyl carbonate, ethyl propyl carbonate, dimethyl carbonate (DMC), diethyl carbonate (DEC), dipropyl carbonate, propylene carbonate (PC), ethylene carbonate (EC), fluoroethylene carbonate (FEC) ), vinylene carbonate (VC), vinylethylene carbonate (VEC), butylene carbonate, ethyl propionate, ethyl butyrate, dimethyl sulfoxide, dimethylformamide, dimethylacetamide, γ-valerolactone, γ-butyrolactone, and tetrahydrofuran.

**12.** A lithium secondary battery comprising:

a positive electrode comprising a positive electrode active material;
a negative electrode comprising a negative electrode active material; and
an electrolyte according to any one of claims 1 to 11, positioned between the positive electrode and the negative electrode.

**13.** The lithium secondary battery of claim 12, wherein the positive electrode comprises a compound represented by Formula 7-1:

Formula 7-1 $Li_aNi_xCO_yM_zO_{2-b}A_b$

wherein, in Formula 7-1, $1.0 \leq a \leq 1.2$, $0 \leq b \leq 0.2$, $0.6 \leq x < 1$, $0 < y \leq 0.3$, $0 < z \leq 0.3$, and $x+y+z=1$,
M is at least one selected from among manganese (Mn), vanadium (V), magnesium (Mg), gallium (Ga), silicon (Si), tungsten (W), molybdenum (Mo), iron (Fe), chromium (Cr) ), copper (Cu), zinc (Zn), titanium (Ti), aluminum (Al), and boron (B), and
A is F, S, Cl, Br, or a combination thereof.

FIG. 1

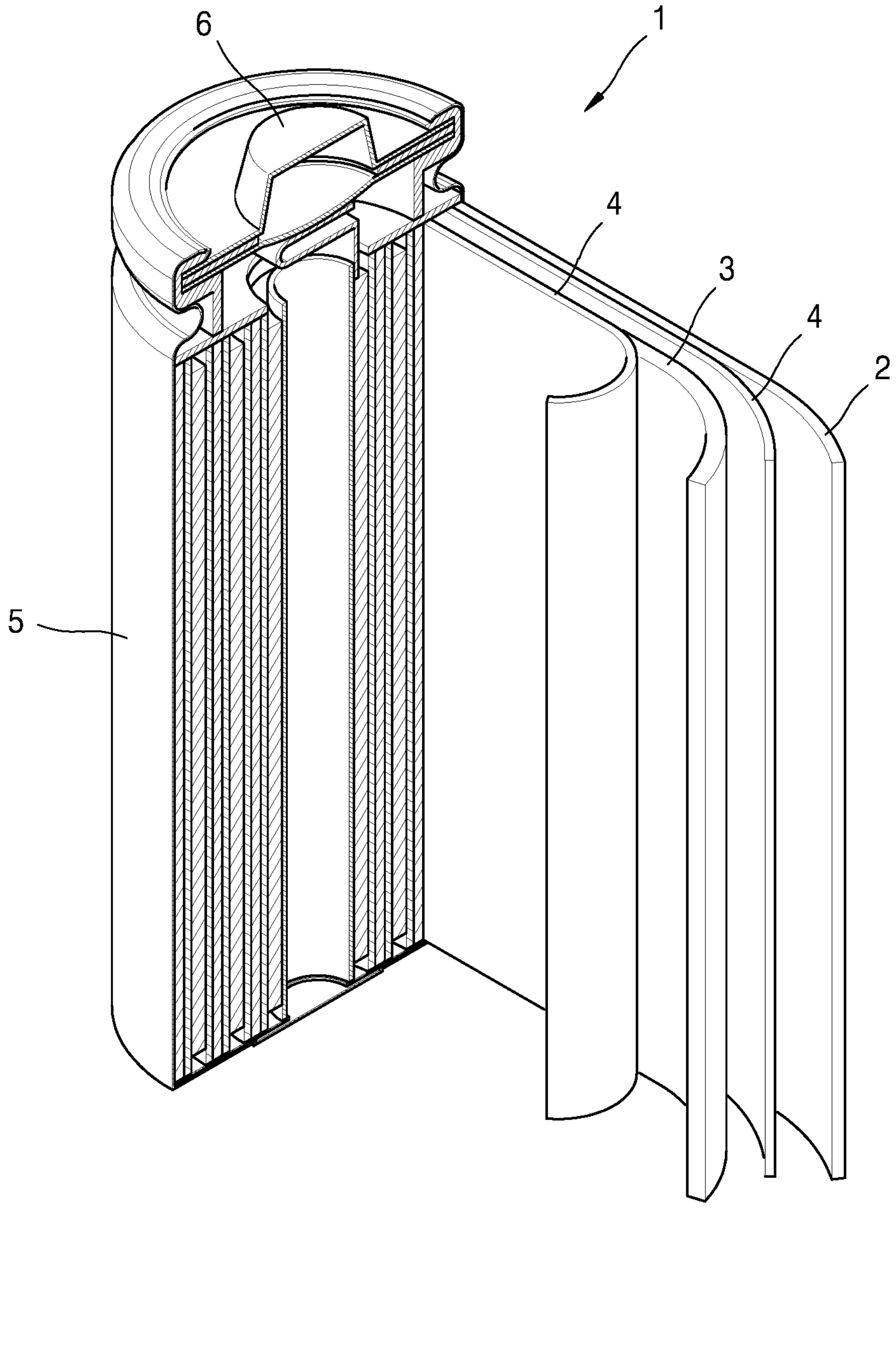

FIG. 2

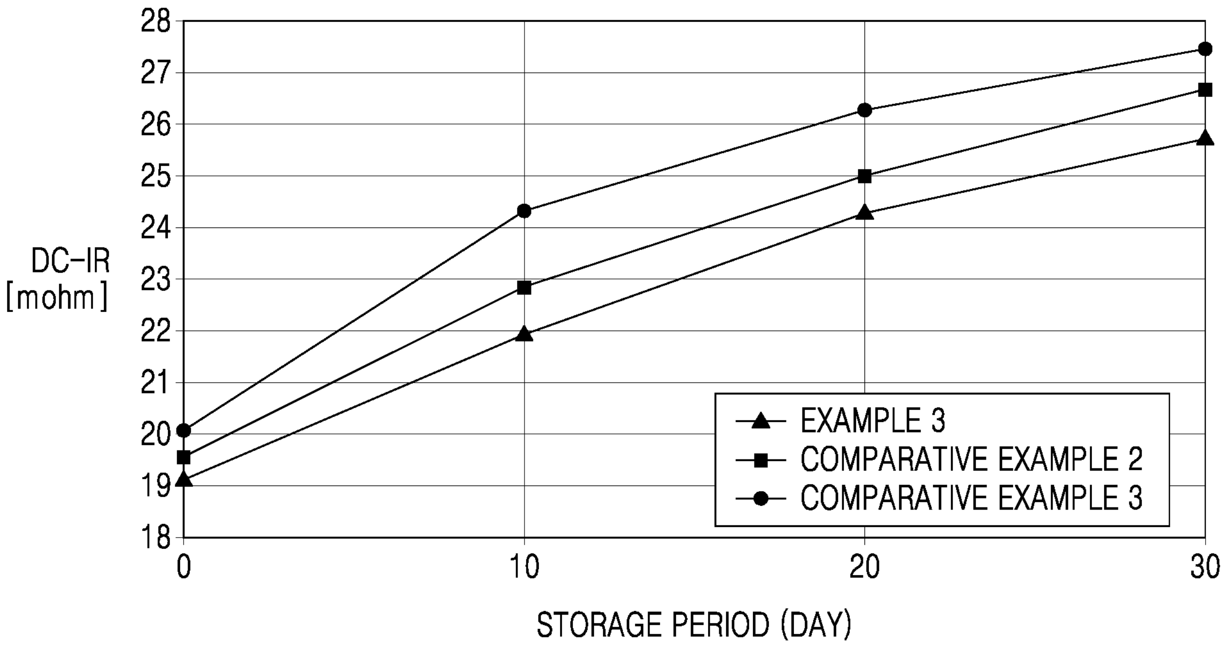
28
27
26
25
24
23
22
21
20
19
18
DC-IR
[mohm]
0
10
20
30
STORAGE PERIOD (DAY)
EXAMPLE 3
COMPARATIVE EXAMPLE 2
COMPARATIVE EXAMPLE 3

**INTERNATIONAL SEARCH REPORT**

International application No. **PCT/KR2021/020176**

**A. CLASSIFICATION OF SUBJECT MATTER**

**H01M 10/0567**(2010.01)i; **H01M 4/525**(2010.01)i; **H01M 10/0525**(2010.01)i

According to International Patent Classification (IPC) or to both national classification and IPC

**B. FIELDS SEARCHED**

Minimum documentation searched (classification system followed by classification symbols)

H01M 10/0567(2010.01); C08K 5/49(2006.01); C25B 9/00(2006.01); H01M 10/052(2010.01); H01M 10/0525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 전해액(electrolyte), 이차전지(secondary battery), 유기용매(organic solvent), 리튬염(lithium salt)

**C. DOCUMENTS CONSIDERED TO BE RELEVANT**

| Category* | Citation of document, with indication, where appropriate, of the relevant passages | Relevant to claim No. |
|---|---|---|
| X<br>A | KR 10-2021-0002038 A (SOULBRAIN CO., LTD.) 06 January 2021 (2021-01-06)<br>See claims 1-10; and paragraphs [0114], [0122], [0123], [0151] and [0184]. | 1,2,4-13<br>3 |
| X | KR 10-2013-0003649 A (SAMSUNG SDI CO., LTD.) 09 January 2013 (2013-01-09)<br>See claims 1-3 and 6; and paragraphs [0061], [0079] and [0093]. | 1,2,4-13 |
| A | JP 2016-018708 A (NEC CORP.) 01 February 2016 (2016-02-01)<br>See claims 1-10. | 1-13 |
| A | CN 108365265 A (MIDDLE MOUNTAIN LIBERAL-MINDEDNESS AND VIGOROUS ENDURANCE NEW MATERIAL CO., LTD.) 03 August 2018 (2018-08-03)<br>See entire document. | 1-13 |
| A | WO 2020-191149 A1 (NOHMS TECHNOLOGIES, INC.) 24 September 2020 (2020-09-24)<br>See entire document. | 1-13 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **07 April 2022** | **07 April 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.
**PCT/KR2021/020176**

| Patent document cited in search report | Publication date (day/month/year) | Patent family member(s) | Publication date (day/month/year) |
|---|---|---|---|
| KR 10-2021-0002038 A | 06 January 2021 | KR 10-2021-0001837 A | 06 January 2021 |
| | | WO 2020-263045 A2 | 30 December 2020 |
| | | WO 2020-263045 A3 | 15 April 2021 |
| KR 10-2013-0003649 A | 09 January 2013 | US 2013-0004840 A1 | 03 January 2013 |
| JP 2016-018708 A | 01 February 2016 | None | |
| CN 108365265 A | 03 August 2018 | None | |
| WO 2020-191149 A1 | 24 September 2020 | AU 2020-240092 A1 | 12 August 2021 |
| | | AU 2020-240092 A1 | 24 September 2020 |
| | | CA 3127680 A1 | 24 September 2020 |
| | | CN 113574059 A | 29 October 2021 |
| | | EP 3942094 A1 | 26 January 2022 |
| | | KR 10-2021-0141995 A | 23 November 2021 |
| | | US 10781225 B1 | 22 September 2020 |
| | | US 2020-0299316 A1 | 24 September 2020 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- KR 1020180031585
- KR 1020180056395
- KR 1020180031586
- KR 102015075052

### Non-patent literature cited in the description

- *Energy & Fuels,* 1991, vol. 5, 786-791
- *Heteroatom Chemistry,* 2010, vol. 21, 515-520